(19) Europäisches Patentamt
European Patent Office
Office européen des brevets

(11) Publication number: **0 109 177**
**B1**

# (12) EUROPEAN PATENT SPECIFICATION

(45) Date of publication of patent specification: **16.12.87**

(51) Int. Cl.⁴: **C 09 J 7/02,** C 09 J 3/14, C 08 F 2/46, C 08 F 20/10

(21) Application number: **83306115.3**

(22) Date of filing: **10.10.83**

(54) **Removable pressure-sensitive adhesive tape.**

(30) Priority: **04.11.82 US 439047**

(43) Date of publication of application:
**23.05.84 Bulletin 84/21**

(45) Publication of the grant of the patent:
**16.12.87 Bulletin 87/51**

(84) Designated Contracting States:
**CH DE FR GB IT LI**

(56) References cited:
**WO-A-81/02262**
**US-A-3 008 850**
**US-A-3 600 268**
**US-A-4 181 752**

**The file contains technical information submitted after the application was filed and not included in this specification**

(73) Proprietor: **MINNESOTA MINING AND MANUFACTURING COMPANY**
**3M Center, P.O. Box 33427**
**St. Paul, Minnesota 55133-3427 (US)**

(72) Inventor: **Esmay, Donald L., c/o Minnesota Mining&Manuf. Co.**
**2501 Hudson Road, P.O. Box 33427**
**St. Paul, MN 55133 (US)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 109 177 B1

Courier Press, Leamington Spa, England.

**Description**

The invention concerns pressure-sensitive adhesive tape which has low-tack and is capable of being peeled off substrates to which it may be applied.

Background Art

The adhesive bond between a pressure-sensitive adhesive tape and a substrate to which it has been applied tends to become gradually stronger so that after some hours, days or months, the tape can no longer be removed without delaminating either the tape or the substrate. Accordingly, peelable tapes such as masking tapes usually have very low initial adhesiveness and should be removed as soon as possible before any appreciable buildup in adhesion occur. Because of their low initial adhesiveness, such tapes often accidentally fall off.

It is believed that the highest quality pressure-sensitive adhesive tapes now on the market are those of U.S. Patent No. Re 24,906. Their adhesives are copolymers of about 88 to 97 parts of acrylic acid ester of non-tertiary alcohol, the alkyl groups of which have an average of 4—12 carbon atoms, and correspondingly about 12 to 3 parts by weight of at least one strongly polar copolymerizable monomer such as acrylic acid. Those adhesives experience no observable deterioration even after years in hot climates; they do, however, experience the adhesion buildup mentioned above, U.S Patent No. 3,008,850 suggesting that less buildup would occur if the modifying copolymerizable monomer were acrylonitrile or methacrylonitrile, both of which are somewhat less polar. Even so, tapes of U.S. Patent No. 3,008,850 experience gradually increasing adhesion to substrates, and there is no assurance that a tape which provides adequate initial adhesion will be removable without delamination after some months at ordinary room temperatures.

Several recent patents disclose that pressure-sensitive adhesive tapes like those of U.S. Patents Re. 24,906 and 3,008,850 can be made by photopolymerizing the same monomers in contact with a carrier web; see, e.g., U.S. Patents No. 4,181,752, 4,303,485, 4,329,384, and 4,330,590. All of the tapes of the working examples of those patents experience the same sort of adhesion buildup as do tapes of the Ulrich patents.

Disclosure of the Invention

The pressure-sensitive adhesive tape of the invention reliably adheres to most clean substrates until deliberately pulled off, yet experiences almost no adhesion buildup after months in contact with a substrate, even if exposed to moderately elevated temperatures. The tape then can be cleanly peeled from the substrate without either delaminating the substrate or leaving any adhesive residue.

Like the pressure-sensitive adhesive tape of U.S. Patent 4,181,752, the novel tape comprises a flexible carrier web and a pressure-sensitive adhesive layer comprising a polymer of one or more monomers which are predominantly alkyl acrylate, the alkyl groups of which have an average of 8—12 carbon atoms. This tape differs from the tapes of U.S. Patent 4,181,752 in that said pressure-sensitive adhesive layer comprises an *in situ* solvent-free polymerized and cross-linked polymer of one or more monomers and are nearly free from any polar copolymerizable monomer. More specifically, no more than 3 mol per cent of said monomers may be one or more strongly polar copolymerizable monomers such as acrylic acid, itaconic acid, hydroxyalkyl acrylates, cyanoalkyl acrylates or acrylamide, and no more than 15 mol percent may be one or more moderately polar copolymerizable monomers such as acrylonitrile, N-vinyl-2-pyrrolidone, vinyl chloride, vinylidene chloride, vinyl toluene, styrene, or diallyl phthalate. The polymerizable composition may further include nonpolar or slightly polar copolymerizable monomers such as butadiene or isoprene in amounts exceeding 15 mol percent as long as such monomers do not interfere with the properties of the polymer.

The adhesive layer of the novel tape is crosslinked before being used, to provide a 180° peelback value* from a glass plate within the range of 5 to 30 N/dm (preferably 10 to 20 N/dm) immediately after being applied. This peelback value does not increase more than 20% after 30 days dwell at 22°C. An immediate 5—30 N/dm 180° peelback value from glass is rather low for a pressure-sensitive adhesive layer and may be characterized as "low-tack", but it is high enough to assure reliable adhesion to ordinary paper, metal, glass, plastic, and painted substrates. Because its 180° peelback value increases no more than 20% after 30 days dwell at 22°C, the tape can be peeled cleanly from such substrates after prolonged dwell. Accordingly, the novel tape is especially for masking tape and for the mounting of posters, bulletins, and temporary labels. When intended for mounting uses, the carrier web tape may be a plastic film, a paper tissue or a nonwoven scrim having pressure-sensitive adhesive layers on both faces. Such a double-coated tape may be readily and cleanly removed both from the object being mounted and from the substrate on which the object is mounted.

---

* In this test, tape is adhered by its adhesive to a test plate under the weight of a 4.5-kg hard rubber roller, 2 passes in each direction. The free end of the tape is attached to a scale, and the test plate is moved away from the scale at a rate of about 3.8 cm per second and at an angle of 180°.

The adhesive surfaces of two pieces of the novel tape can easily be peeled apart, even after remaining in contact with each other for several months and even if exposed to moderately elevated temperatures. By virtue of this characteristic, a double-coated tape of the invention can be wound directly upon itself for storage and shipment without any.need for a disposable liner.

Crosslinking to provide the desired 180° peelback value from glass is especially easy to control by photopolymerizing the monomers in admixture with a photocrosslinker as in Eample 27 of U.S. Patent No. 4,181,752. Useful photocrosslinkers include the 2,4-bis(trichloromethyl)-6-p-methoxystyryl-*s*-triazine of that example and any of the chromophore-substituted-halomethyl-*s*-triazines of U.S. Patent No. 4,329,384 and 4,330,590. Other useful photocrosslinkers are polyacrylic-functional monomers such as trimethylolpropane triacrylate; pentaerythritol tetraacrylate; 1,2-ethylene glycol diacrylate; 1,6-hexanediol diacrylate; and 1,12-dodecanediol diacrylate. Each of these photocrosslinkers is useful in the approximate range of 0.05 to 0.5 percent by weight of the polymerizable monomers or resulting polymer. The adhesive layer is usually sufficiently crosslinked when, on attempting to dissolve in heptane, the undissolved gel component exceeds 50%.

Since the viscosity of the polymerizable monomers tends to be quite low, the monomers may be partially polymerized to a viscosity in the range of about 1000 to 40,000 mPas before being admixed with the crosslinker and coated onto the flexible carrier web. Viscosities within the range of 5,000 to 15,000 mPas are preferred for ease of handling. Instead of being partially polymerized, the monomers can be mixed with a thixotropic agent such as fumed silica, coated on a substrate, and then followed by polymerized and crosslinked in a single *in situ* step.

In the current state of the art, photopolymerization of thin coatings is carried out in an inert atmosphere. A sufficiently inert atmosphere can be achieved by covering a layer of the photoactive coating with a plastic film which is transparent to ultraviolet radiation, and then irradiating through the film in air. If instead of covering the polymerizable coating the photopolymerization is to be carried out in an inert atmosphere, the permissible oxygen content of the inert atmosphere can be increased by mixing into the polymerizable composition an oxidizable tin compound as taught in U.S. Patent No. 4,303,485, which also teaches that by doing so, thick coatings can be polymerized in air. If the monomers are partially polymerized and the polymerization is to be completed *in situ* by heat, it is usually necessary to add additional heat-activatable polymerization initiator to the partially polymerized composition.

*In situ* polymerization can also be effected by electron beam as suggested in U.S. Patent No. 4,234,500. See also U.S. Patent No. 2,956,904.

Other materials which can be blended with the polymerizable mixtures include tackifiers, reinforcing agents, fire retardants, and other modifiers, some of which may copolymerize with the alkyl acrylate monomer or photopolymerize independently.

Glass microbubbles having an average diameter of 10 to 200 micrometers can be blended with photopolymerizable mixtures as taught in U.S. Patent No. 4,223,067. If the microbubbles comprise 20 to 65 volume percent of the pressure-sensitive adhesive, the polymerized product will have a foam-like appearance and be suitable for uses to which foam-backed pressure-sensitive adhesive tapes are put.

In the following examples, all parts are given by weight.

Example 1

To 100 parts of isooctyl acrylate was added 0.04 part of 2,2-dimethoxy-2-phenyl acetophenone photoinitiator ("Irgacure" 651). This blend was partially polymerized by exposure to ultraviolet radiation to provide a syrup about 3000 mPas in viscosity. After adding 0.2 part of hexanediol diacrylate crosslinker and an additional 0.1 part of the photoinitiator, the syrup was poured onto a first biaxially oriented polyethylene terephthalate film and covered by a second such film at a knife which was adjusted to squeeze the syrup to provide a uniform coating of about 0.05 mm thickness. The facing surfaces of the first and second films respectively had ultrathin adhesion-promoting and low-adhesion coatings.

The composite emerging from the knife was exposed to a bank of fluorescent black light bulbs (Sylvania F20T12BL), 90% of the emissions of which were between 300 and 400 nm with a maximum of 351 nm. The composite received 500 mj of energy as measured by an International Light "Light Bug" meter which is spectrally responsive between 250 and 430 nm, maximum 350 nm.

After stripping off the second film, the resulting pressure-sensitive adhesive tape was wound upon itself in roll form.

Examples 2—6

A number of tapes were prepared in the same way as in Example I except that some of the tapes employed other crosslinkers instead of hexanediol diacrylate (HDDA) namely,

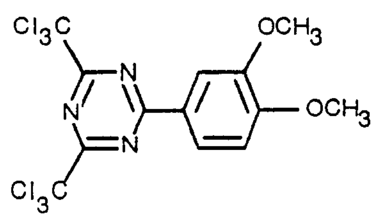

(here called "DMPT") and

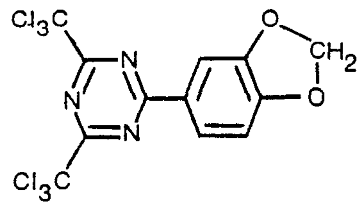

(here called "DOPT").

Some of the initial monomer mixtures included stannous octoate ("SnOct") as reported below (the amounts of crosslinker and stannous octoate being indicated in parts per 100 parts monomer):

| Example | Alkyl Acrylate | Crosslinker | SnOct |
|---|---|---|---|
| 1 | IOA | HDDA 0.2 | 0 |
| 2 | IOA | HDDA 0.2 | 0.5 |
| 3 | IOA | DMPT 0.12 | 0 |
| 4 | IOA | DOPT 0.16 | 0.5 |
| 5 | 99 IOA<br>1 AA | HDDA 0.15 | 0.5 |
| 6 | 98 IOA<br>2NVP | HDDA 0.15 | 0.5 |

AA=acrylic acid
NVP=N-vinyl-2-pyrrolidone

The tapes of Examples 1—6 were tested for immediate 180° peelback from various surfaces with the following results:

| | 180° Peelback (N/dm) from | | |
|---|---|---|---|
| Example | Glass | Polypropylene | Stainless Steel |
| 1 | 11 | 15 | 14 |
| 2 | 10 | 7 | NT |
| 3 | 13 | 18 | 18 |
| 4 | 14 | 13 | NT |
| 5 | 13 | NT | NT |
| 6 | 14 | NT | NT |

NT=not tested

Strips of the tapes of each of Example 1—6 were adhered by their adhesive layers to writing paper and to a painted automotive metal test panel. After six months at ordinary room temperatures, each of the strips was easily peeled away without leaving any adhesive residue.

Other strips of the tapes of Examples 1 and 2 were adhered by their adhesive layers to writing paper which was then placed in an oven at 70°C for three days. After cooling to room temperature, each tape was cleanly peeled off without delaminating the paper or leaving any adhesive residue on the paper.

Comparison Tests

Tapes were made as in Example 1 except omitting the crosslinker. When strips of these tapes remained adhered to the same writing paper and painted metal panel for three weeks at ordinary room temperature, neither strip could be cleanly peeled from the substrates.

Another tape was made as in Example 1 except replacing 10 percent of the IOA with acrylic acid and reducing the amount of HDDA to 0.15 part. After three weeks at ordinary room temperature in contact with the same writing paper and painted metal panel, strips of this tape could not be cleanly peeled from either substrate.

Example 7

A mixture of 96 parts of isooctylacrylate, 4 parts of acrylic acid, and 0.94 part of photoinitiator ("Irgacure" 651) was partially polymerized by exposure to ultraviolet radiation to provide a syrup of coatable viscosity. After mixing 0.14 part of hexanediol diacrylate and an additional 0.1 part of the photoinitiator into the syrup, the blend was poured onto the low-adhesion surface of a first disposable plastic film. A 0.1-mm film of unprimed unplasticized, unpigmented polyvinyl chloride was laid onto the syrup to provide a composite, which was drawn beneath a first knife to squeeze the syrup to a uniform thickness of about 0.05 mm. A second syrup indentical to that used in Example 1 was poured onto the exposed face of the vinyl film, and to this was joined, at a second knife, the low-adhesion surface of a second disposable plastic film. The spacing beneath the second knife was adjusted to squeeze the second syrup to a uniform thickness of about 0.05 mm.

The full composite was then passed between two banks of ultraviolet lamps, each bank identical to that used in Example 1 and each providing an exposure to 500 mj of energy. This polymerized both of the syrups to a pressure-sensitive adhesive state, thus creating a double-coated pressure-sensitive adhesive tape having a central flexible carrier web. The layer from the first syrup was ordinary aggressively pressure-sensitive adhesive capable fo forming strong bonds which would experience gradual adhesion buildup typical of pressure-sensitive adhesives of the prior art. The adhesive layer from the second syrup had the same long-term removability of the tape of Example 1 (i.e., 180° Peelback value from glass of 11 N/dm).

Both disposable plastic films were removed from another strip of the double-coated tape of this example, and the strip was wound upon itself on a 7.6 cm core. Even though it had no liner, the strip could be unwound without any delamination of transfer of adhesive from one face to the other, even after being stored for six months at ordinary room temperatures.

Example 8

A double-coated tape was made as in Example 7 except that the first adhesive layer was a copolymer of 90 parts of isooctyl acrylate and 10 parts of acrylic acid, the crosslinker was replaced by 0.15 part of the DMPT crosslinker, and the polymerizable mixture included 35 parts of pentabromodiphenyl oxide as a flame retardant. Also, the photopolymerizable mixture for the second adhesive layer included 35 parts of that flame retardant. The first layer of the resulting tape was an ordinary aggressively pressure-sensitive adhesive, and the second adhesive layer had low-tack and was cleanly peelable from ordinary substrates after prolonged dwell.

After removing the first disposable plastic film, the exposed adhesive layer was applied to the back of a vinyl sheet intended for aircraft carpet use. Within a short time the tape became securely bonded to the vinyl sheet. After then removing the second disposable plastic film, the exposed adhesive layer was applied to an aircraft floor panel which had a covering of polyvinylidene fluoride film. Tests showed that this adhesive held the vinyl sheet securely in place against the sort of stresses experienced by an aircraft carpet in use and that the vinyl sheet with its double-coated tape could be repeatedly removed for such purposes as changing the cabin between passenger and freight configurations.

Example 9

A double-coated tape was made as in Example 7 except that the central carrier web was biaxially oriented polyethylene terephthalate film and both adhesive layers were identical to that of the Example 1 tape. The polyethylene terephthalate film had a thickness of 0.05 mm, and one of its faces had an adhesion-promoting coating while its other face was untreated. This double-coated tape was wound upon itself into roll form without a liner. After six months at ordinary room temperatures, it could be unwound easily without any delamination or adhesive transfer and could be put to uses requiring both assured immediate adhesion and easy removability after being in place for prolonged periods of time.

Example 10

A double-coated tape was made as in Example 7 except that one of its adhesive layers was a copolymer of 99.2 parts of isooctyl acrylate and 0.8 parts of acrylic acid, and the hexanediol diacrylate crosslinker was employed in amounts of 0.32 part in the copolymer layer and 0.22 part in the homopolymer

layer. The tape was wound upon itself on a 1.9 cm core and placed in an oven at 70°C for three days. After cooling to room temperature, it was unwound easily without any adhesive transfer.

**Claims**

1. A pressure-sensitive adhesive tape having a flexible carrier web and a pressure-sensitive adhesive layer of an *in situ* polymerized and crosslinked polymer of one or more monomers which are predominantly alkyl acrylate and are nearly free from any polar copolymerizable monomer, characterized in that said adhesive layer is a polymer of (a) 97 to 100 mol percent of one or more alkyl acrylate monomers, the alkyl groups of which have an average of 8 to 12 carbon atoms, and 0 to 3 mol percent of a copolymerizable monomer selected from acrylic acid, itaconic acid, hydroxyalkyl acrylates, cyanoalkyl acrylates, and acrylamide, and, additionally, 0.05 to 0.5 weight percent photocrosslinker based on the weight of the monomers, or (b) 85 to 100 mol percent of one or more alkyl acrylate monomers, the alkyl groups of which have an average of 8 to 12 carbon atoms, and 0 to 15 mol percent of a copolymerizable monomer selected from acrylonitrile, N-vinyl-2-pyrrolidone, vinyl chloride, vinylidene chloride, vinyl toluene, styrene, and diallyl phthalate, and, additionally, 0.05 to 0.5 weight percent photocrosslinker based on the weight of the monomers, said adhesive layer being crosslinked to provide a 180° peelback value from glass within the range of 5 to 30 N/dm immediately after being applied, which value does not increase more than 20% after 30 days dwell at 22°C, thus assuring both reliable adhesion and clean peelability after prolonged dwell.

2. Pressure-sensitive adhesive tape as defined in claim 1 characterized in that the copolymerizable monomer is acrylic acid.

3. Pressure-sensitive adhesive tape as defined in claim 1 characterized in that the copolymerizable monomer is acrylonitrile or N-vinyl-2-pyrrolidone.

4. Pressure-sensitive adhesive tape as defined in claim 1 characterized in that said tape has a second pressure-sensitive adhesive layer as defined in claim 1 on the other face of the carrier web.

5. Pressure-sensitive adhesive tape as defined in claim 4 characterized in that the two pressure-sensitive adhesive layers are identical.

6. Pressure-sensitive adhesive tape as defined in claim 4 characterized in that said tape is wound upon itself in roll form and can be unwound after prolonged storage without any delamination or transfer of adhesive.

7. Pressure-sensitive adhesive tape as defined in claim 1 characterized in that said tape has an ordinary aggressively pressure-sensitive adhesive layer on the other face of the carrier web.

8. Pressure-sensitive adhesive tape as defined in claim 1, 5 or 7 characterized in that said tape is wound upon itself in roll form and can be unwound after prolonged storage without any delamination or transfer of adhesive.

9. Pressure-sensitive adhesive tape as defined in claim 1 characterized in that said tape has a 180° peelback value from glass within the range of 10 to 20 N/dm immediately after being applied.

10. A process for producing the pressure-sensitive adhesive tape of claim 1, said pressure-sensitive adhesive tape having a flexible carrier web and a pressure-sensitive adhesive layer of an *in situ* polymerized and crosslinked polymer of one or more monomers which are predominantly alkyl acrylate and are nearly free from any polar copolymerizable monomer characterized by

coating onto a flexible carrier web a solvent-free monomer solution containing (a) 97 to 100 mol percent of one or more alkyl acrylate monomers, the alkyl groups of which have an average of 8 to 12 carbon atoms, and 0 to 3 mol percent of a copolymerizable monomer selected from acrylic acid, itaconic acid, hydroxyalkyl acrylates, cyanoalkyl acrylates, and acrylamide, and, additionally, 0.05 to 0.5 weight percent photocrosslinker based on the weight of the monomers or (b) 85 to 100 mol percent of one or more alkyl acrylate monomers, the alkyl groups of which have an average of 8 to 12 carbon atoms, and 0 to 15 mol percent of a copolymerizable monomer selected from acrylonitrile, N-vinyl-2-pyrrolidone, vinyl chloride, vinylidene chloride, vinyl toluene, styrene, and diallyl phthalate, and, additionally 0.05 to 0.5 weight percent photocrosslinker based on the weight of the monomers, and

polymerizing and crosslinking said coating *in situ* by exposure to ultraviolet radiation.

11. The process of claim 10 wherein said polymerization and crosslinking is carried out in an inert atmosphere.

12. The process of claim 10 wherein said monomers are partially polymerized to a viscosity in the range of about 1000 to 40,000 cps before being admixed with the crosslinker and coated onto the flexible carrier web.

**Patentansprüche**

1. Haftklebeband mit einer flexiblen Traglage und einer Haftkleberschicht aus einem in situ polymerisierten und vernetzten Polymer aus einem oder mehreren Monomeren, die vorwiegend aus Akylacrylat bestehen und fast frei sind von irgendeinem polaren copolymerisierbaren Monomer, dadurch gekennzeichnet, daß die Kleberschicht ein Polymer ist, das (a) 97 bis 100 Mol-% eines oder mehrerer Alkylacrylatmonomer enthält, dessen oder deren Alkylgruppen durchschnittlich 8 bis 10 Kohlestoffatome haben, und 0 bis 3 Mol-% eines copolymerisierbaren Monomers, das aus der Acrylsäure, der Itaconsäure,

den Hydroxyalkylacrylaten, den Cyanoalkylacrylaten und dem Acrylamid ausgewählt ist, und zusätzlich ein Photovernetzungsmittel in einer auf das Gewicht der Monomere bezogenen Menge von 0,05 bis 0,5 Gew.% oder (b) 85 bis 100 Mol-% eines oder mehrerer Alkylacrylatmonomere, dessen oder deren Alkylgruppen durchschnittlich 8 bis 12 Kohlenstoffatome haben, und 0 bis 15 Mol-% eines copolymerisierbaren Monomers, das aus dem Acrylnitril, dem N-Vinyl-w-pyrrolidon, dem Vinylchlorid, dem Vinylidenchlorid, dem Vinyltouol, dem Styrol und dem Diallylphthalat ausgewählt ist, sowie ein Photovernetzungsmittel in einer auf das Gewicht der Monomere bezogenen Menge von 0,05 bis 0,5 Gew.%, wobei die Kleberschicht derart vernetzt ist, daß sie unmittelbar nach dem aufbringen auf Glas eine 180°-Schlagfestigkeit im Bereich von 5 bis 30 N/dm hat und dieser Wert während einer Verweilzeit von 30 Tagen bei 22°C µm nicht mehr als 20% ansteigt, so daß auch nach einer langandauernden Verweilzeit eine zuverlässige Haftung une eine saubere Abschälbarkeit gewährleistet sind.

2. Haftklebeband nach Anspruch 1, dadurch gekennzeichnet, daß das copolymerisierbare Monomer Acrylsäure ist.

3. Haftklebeband nach Anspruch 1, dadurch gekennzeichnet, daß das Copolymerisierbare Monomer Acrylnitril oder N-Vinyl-2-pyrrolidon ist.

4. Haftklebeband nach Anspruch 1, dadurch gekennzeichnet, daß es auf der anderen Seite der Traglage eine zweite Haftkleberschicht nach Anspruch 1 besitzt.

5. Haftklebeband nach Anspruch 4, dadurch gekennzeichnet, daß die beiden Haftkleberschichten identisch sind.

6. Haftklebeband nach Anspruch 4, dadurch gekennzeichnet, daß das Band zu einer Rolle aufgewickelt ist und nach langandauernder Lagerung ohne jegliche Schichtentrennung oder Übertragung von Kleber abgewickelt werden kann.

7. Haftklebeband nach Anspruch 4, dadurch gekennzeichnet, daß das Band auf der anderen Seite der Traglage mit einer Schicht aus einem normalen, stark klebenden Haftkleber versehen ist.

8. Haftklebeband nach Anspruch 1, 5 oder 7, dadurch gekennzeichnet, daß das Band zu einer Rolle aufgewickelt ist und nach langandauernder Lagerung ohne jegliche Schichtentrennung und ohne Übertragung von Kleber abwickelbar ist.

9. Haftklebeband nach Anspruch 1, dadurch gekennzeichnet, daß das Band unmittelbar nach dem Aufbringen auf Glas eine 180°-Schälfestigkeit im Bereich von 10 bis 20 N/dm hat.

10. Verfahren zum Erzeugen des Haftklebebandes nach Anspruch 1, mit einer flexiblen Traglage und einer Haftkleberschicht aus einem in situ polymerisierten und vernetzten Polymer aus einem oder mehreren Monomeren, die vorwiegend aus Alkylacrylat bestehen und fast frei sind von irgendeinem polaren copolymerisierbaren Monomer, dadurch gekennzeichnet, daß (a) 97 bis 100 Mol-% eines oder mehrerer Alkylacrylatmonomere enthält, dessen oder deren Alkylgruppen durchschnittlich 8 bis 10 Kohlenstoffatome haben, und 0 bus 3 mol-% eines copolymerisierbaren Monomers, das aus der Acrylsäure, der Itaconsäure, den Hydroxyalkylacrylaten, den Cyanoalkylacrylaten und dem Acrylamid ausgewählt ist, und zusätzlich ein Photovernetzungsmittel in einer auf das Gewicht der Monomere bezogenen Menge von 0,05 bis 0,5 Gew.% oder (b) 85 bis 100 Mol-% eines oder mehrerer Alkylacrylatmonomere, dessen oder deren Alkylgruppen durchschnittlich 8 bis 12 Kohlenstoffatome haben, und 0 bis 15 Mol-% eines copolymerisierbaren Monomers, das aus dem Acrylnitril, dem N-Vinyl-2-pyrrolidon, dem Vinylchlorid, dem Vinylidenchlorid, dem Vinyltouol, dem Styrol und dem Diallylphthalt ausgewähalt ist, sowie ein Photovernetzungsmittel in einer auf das Gewicht der Monomere bezogenen Menge von 0,05 bis 0,5 Gew.%, und

der genannte Überzug einer Ultraviolettstrahlung ausgesetzt und dadurch in situ polymerisiert und vernetzt wird.

11. Verfahren nach Anspruch 10, dadurch gekennzeichnet, daß die Polymerisation und das Vernetzen in einer inerten Atmosphäre durchgeführt werden.

12. Verfahren nach Anspruch 10, dadurch gekennzeichnet, daß die Monomere auf eine Viskosität im Bereich von etwa 1000 bis 40 000 cps teilpolymerisiert werden, bevor sie mit dem Vernetzungsmittel vermischt und auf die flexible Traglage aufgetragen werden.

**Revendications**

1. Ruban adhésif sensible à la pression ayant une feuille support souple et une couche adhésive sensible à la pression faite d'un polymère polymérisé et réticulé in situ d'un ou plusieurs monomères qui sont de façon prédominante des composés acrylates d'alkyle et qui sont presque dépourvus de tout monomère copolymérisable polaire, caractérisé en ce que ladite couche adhésive est un polymère de (a) 97 à 100% molaires d'un ou plusieurs acrylates d'alkyles monomères, dont les groupes alkyles ont en moyenne 8 à 12 atomes de carbone et de 0 à 3% molaires d'un monomère copolymérisable choisi parmi l'acide acrylique, l'acide itaconique, les acrylates d'hydroxyalkyle, les acrylates de cyanoalkyle et l'acrylamide et, de plus, 0,05 à 0,5% en poids d'agent photoréticulant par rapport au poids des monomères, ou, (b) 85 à 100% molaires d'un ou plusieurs acrylates d'alkyle monomères, dont les groupes alkyle ont en moyenne 8 à 12 atomes de carbone et 0 à 15% molaires d'un monomère copolymérisable choisi parmi l'acrylonitrile, la N-vinyl-2-pyrrolidone, le chlorure de vinyle, le chlorure de vinylidène, le vinyltoluène, le styrène et le phtalate de diallyle et, de plus, 0,05 à 0,5% en poids d'agent photoréticulant par rapport au

poids desmonomères, ladite couche adhésive étant réticulée pour assurer un pelage à 180° du verre dans la gamme de 5 à 30 N/dm immédiatement après l'application, laquelle valeur ne s'accroît pas de plus de 20% après 30 jours de fixation à 22°C, de façon à assurer à la fois une adhésion fiable et une séparation propre après séjour prolongé.

2. Ruban adhésif sensible à la pression comme défini dans la revendication 1, caractérisé en ce que le monomère copolymérisable est l'acide acrylique.

3. Ruban adhésif sensible à la pression comme défini dans la revendication 1, caractérisé en ce que le monomère copolymérisable est l'acrylonitrile ou la N-vinyl-2-pyrrolidone.

4. Ruban adhésif sensible à la pression comme défini dans la revendication 1, caractérisé en ce qu'il a une seconde couche adhésive sensible à la pression, comme défini dans la revendication 1, sur l'autre face de la feuille support.

5. Ruban adhésif sensible à la pression comme défini dans la revendication 4, caractérisé en ce que les deux couches adhésives sensibles à la pression sont identiques.

6. Ruban adhésif sensible à la pression comme défini dans la revendication 4, caractérisé en ce qu'il est enroulé sur lui-même sous la forme d'un rouleau et peut être déroulé après stockage prolongé sans aucun délaminage ou transfert d'adhésif.

7. Ruban adhésif sensible à la pression comme défini dans la revendication 1, caractérisé en ce qu'il a une couche adhésive ordinaire ayant un caractère autocollent agressif sur l'autre face de la feuille support.

8. Ruban adhésif sensible à la pression comme défini dans la revendication 1, 5 ou 7, caractérisé en ce qu'il est enroulé sur lui-même sous la forme d'un rouleau et peut être déroulé après stockage prolongé sans aucun délaminage ou transfer d'adhésif.

9. Ruban adhésif sensible à la pression comme défini dans la revendication 1, caractérisé en ce qu'il a un pelage du verre à 180° dans la gamme de 10 à 20 N/dm immédiatement après application.

10. Procédé pour la fabrication du ruban adhésif sensible à la pression de la revendication 1, ledit ruban adhésif sensible à la pression ayant une feuille support souple et une couche adhésive sensible à la pression d'un polymère polymérisé et réticulé in situ d'un ou plusieurs monomères qui sont de façon prédominante des composés acrylate d'alkyle et sont presque dépourvus de tout monomère copolymérisable polaire, ledit procédé étant caractérisé par

le revêtement d'une feuille support souple avec une solution monomère sans solvant contenant (a) 97 à 100% molaires d'un ou plusieurs acrylats d'alkyle monomères dont les groupes alkyle ont en moyenne 8 à 12 atomes de carbone et 0 à 3% molaires d'un monomère copolymérisable choisi parmi l'acide acrylique, l'acide itaconique, les acrylates d'hydroxyalkyle, les acrylates de cyanoalkyle et l'acrylamide et, de plus, 0,05 à 0,5% en poids d'agent photoréticulant par rapport au poids des monomères, ou, (b) 85 à 100% molaires d'un ou plusieurs acrylates d'alkyle monomères, dont les groupes alkyle ont en moyenne 8 à 12 atomes de carbone et 0 à 15% molaires d'un monomère copolymérisable choisi parmi l'acrylonitrile, la N-vinyl-2-pyrrolidone, le chlorure de vinyle, le chlorure de vinylidène, le vinyltoluène, le styrène et le phtalate de diallyle et, de plus, 0,05 à 0,5% en poids d'agent photoréticulant par rapport au poids des monomères, et

polymérisation et réticulation dudit revêtement in situ par exposition à un rayonnement ultraviolet.

11. Procédé suivant la revendication 10, dans lequel lesdites polymérisation ët réticulisation sont effectuées dans une atmosphère inerte.

12. Procédé suivant la revendication 10, dans lequel lesdits monomères sont partiellement polymérisés jusqu'à une viscosité dans la gamme d'environ 1 000 à 40 000 cP avant d'être mélangés avec l'agent réticulant et appliqués à la feuille support souple.